# EUROPEAN PATENT APPLICATION

(11) **EP 3 692 810 A1**
(43) Date of publication of application: **12.08.2020**
(21) Application number: 19156031.7
(22) Date of filing: 07.02.2019
(51) Int. Cl.: A23L 19/00, B65B 25/00

(54) **METHOD FOR CONDITIONING BEETROOT**

(71) Applicant: FLORETTE Holding, 50430 Lessay (FR)
(72) Inventor: ARMSTRONG, John, Cheshire SK93UG (GB)
(74) Representative: Agasse, Stéphane

(57) **Abstract**

The invention concerns a method for processing beetroot comprising a steam cooking, said method comprising the following steps:
Placing at least one raw beetroot in a steam cooker;
Steam-cooking the beetroot at a core temperature of 85°C-105°C during 40-60 minutes;
Depositing the cooked beetroot in a packaging;
Sealing the packaging; and
Cooling the conditioned beetroot to a temperature of 8°C or below.

## Description

The present invention pertains to a method for processing beetroot.

Raw beetroot may be eaten but it is largely consumed once cooked. Due to a long cooking and the release of highly coloured juice, raw beetroot handling is undesired and it is generally purchased in a processed form where it is cooked and packaged in pouches.

In accordance with the usual industrial processes, the beetroot is cooked either in steam at a temperature of 110°C or above during at least 40 minutes or in boiling water at at least 95°C during 45-60 minutes. In order to further ensure shelf-life, the beetroot is generally subjected to either:
- A pickling step which generally results in a limited shelf-life of 10-16 days or,
- Vacuum packed in pouches which are pasteurised or sterilized in an autoclave. The resulting beetroot may be stored up to six months at room temperature.

If a very long shelf-life is of interest, it should be noted that the organoleptic properties of the beetroot decrease because of the severe conditions of treatment and the beetroot is no longer considered as a fresh product by most consumers. In addition to this, due to the pickling step which usually consists of a prolonged submersion in vinegar of up to several hours, the beetroot retains a strong and distinctive taste of vinegar. Consumers are now looking for fresher and higher quality products and beetroot resulting from the above methods fail to meet their expectations.

The present invention solves this problem by providing a method for processing beetroot which preserves the organoleptic properties of the latter, and specifically its natural taste. This makes the resulting product more attractive as fresh and ready to eat, and more versatile in its end usage, for example soups and other recipe occasions where vinegar affects the flavour.

The method of the invention comprises a steam cooking in such conditions that it maintains a fresh and natural taste and colour while being capable of a shelf-life up to 12 days for the end product. Beetroot is a raw material with a propensity towards yeast growth and despite the mild conditions of the present method, the management of this growth is successful.

According to the invention, the method comprises the following steps:
Placing at least one raw beetroot in a steam cooker;
Steam-cooking the beetroot at a core temperature of the beetroot of 85°C-105°C during 40-60 minutes;
Depositing the cooked beetroot in a packaging;
Sealing the packaging; and
Cooling the conditioned beetroot at a temperature of 8°C or below within 4 hours.

As an additional benefit, it has been unexpectedly observed that the resulting beetroot releases less juice than the one obtained by known methods, which makes the product easier to handle for the end consumer.

The steam-cooking step is a critical step in the method of the invention to attain all the above-mentioned benefits. As mentioned, during this step, a temperature of 85-105°C, preferably 90-100°C, more preferably 94-96°C, even 95°C, should be achieved in the core of the beetroot. The core temperature may be measured with one probe or more which is/are placed in the centre of the beet. Depending on the cooking machine, depending on the beetroot size, such a core temperature is generally reached by heating the cooking chamber at a temperature of 90-110°C, preferably 95-105°C, more preferably 99-101°C, even 100°C, respectively, for an average size of the beetroots of 50-70 mm. For processing smaller beetroots, for example baby beetroots, the heating of the cooking chamber will be adjusted in a range of lower temperatures.

In order to optimise the effectiveness of the method, it preferably have the following features; these features being considered alone or in any combination.

In this method, the raw beetroots to be processed have preferably a similar size so that the temperature is equally reached in the core of the beets. For illustration purposes, an appropriate average size of the raw beetroot is preferably around 50-70 mm, this value corresponding to the largest dimension of the beet. However, the size is not an essential feature provided that the steam-cooking conditions in the steam-cooker ensure a core temperature of 85-105°C, preferably 90-100°C, more preferably 94-96°C, even 95°C. Actually, the more homogenous in size, the more efficient the process.

In an embodiment of the invention, the raw beetroot is peeled. The peeling is carried out by any well-known techniques such as abrasion, preferably after washing, or any other means.

Advantageously, each raw and peeled beetroot is placed on an individual racking tray in the steam-cooker to ensure the desired core temperature.

In a preferred variant, the beetroot is steam-cooked to ensure a core temperature of about 95°C, during around 4 hours.

Once steam-cooked, the beetroots are packaged. The packaging may be of any appropriate type, solid or flexible, or partially solid and partially flexible. Preferably, the packaging is a pouch, more preferably a flexible pouch in a material for food applications. In a most advantageous embodiment, the packaging is a pouch in a alimentary material such an alimentary plastic, and is sealable, even resealable. The beetroots may be individually packaged or several beetroots are deposited in a packaging, for example a pouch. One further interest of the invention is that the packaging step does not require to be carried out under vacuum.

Then the thus packaged beetroots are chilled to a temperature of 8°C or less, preferably 5°C or less. Before storage, the cooling is preferably maintained during at least 4 hours.

The invention also relates to processed beetroots that are obtainable by a method of the invention as described above, and specifically individually packaged processed beetroots or multiple packaged beetroots.

As it will be evidenced in the following example, the method of the invention allows to produce a product without preservative or vinegar that may be stored up to 12 days, at a temperature of 0-8°C, observing no or an acceptable level of yeast growth or other typical pathogen growth.

The method of the invention may be implemented in any plant, provided the steam-cooking step as described above is achieved. By way of illustration, the steam-cooking station is configured so that the process does not progress until the core temperature of the beetroot of about 95°C is achieved. Advantageously, the beetroot once on the rack has three temperature probes placed in the centre of the top rack, the middle of the second rack and the bottom tray of the third rack to monitor the core temperature.

In the following example, beetroots having an average size of 50-70 mm are peeled then steam-cooked to ensure a core temperature of 95°C during 45 minutes. At the exit of the steam-cooking chamber, they are packaged and chilled to 8°C.

The presence of yeasts, moulds and pathogenic bacteria is measured and reported in the following table.

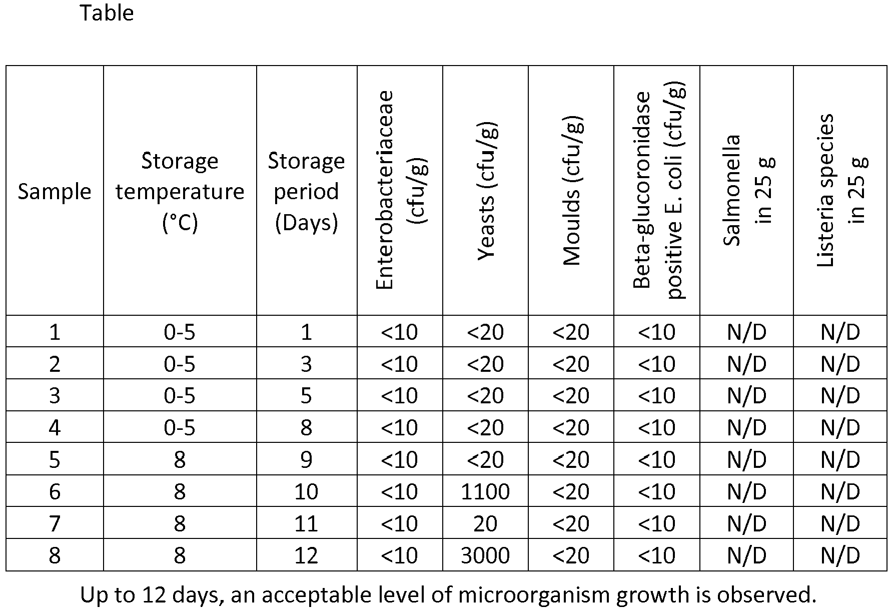

## Claims

1. Method for processing beetroot comprising a steam cooking, said method comprising the following steps:
Placing at least one raw beetroot in a steam cooker;
Steam-cooking the beetroot at a core temperature of 85°C-105°C during 40-60 minutes;
Depositing the cooked beetroot in a packaging;
Sealing the packaging; and
Cooling the conditioned beetroot to a temperature of 8°C or below.

2. Method of claim 1, wherein the raw beetroot is peeled.

3. Method of claim 1 or 2, wherein the raw beetroot has an average size of 50-70 mm.

4. Method of any one of claims 1 to 3, wherein each beetroot is placed on an individual racking tray in the steam-cooker.

5. Method of any one of claims 1 to 4, wherein the beetroot is steam-cooked at a core temperature around 95°C, during about 4 hours.

6. Method of any one of claims 1 to 5, wherein one or several beetroots are deposited in a pouch.

7. Method of any one of claims 1 to 6, wherein the pouch is a resealable.

8. Method of any one of claims 1 to 7, wherein the conditioned beetroot is cooled to a temperature of 8°C or below during at least 4 hours.

9. Method of claim 8, wherein after cooling the beetroot is stored at a temperature of 0-8°C.
